(19) Europäisches Patentamt
European Patent Office
Office européen des brevets

(11) **EP 4 632 533 A1**

(12) **EUROPEAN PATENT APPLICATION**

(43) Date of publication:
**15.10.2025 Bulletin 2025/42**

(21) Application number: **25169123.4**

(22) Date of filing: **08.04.2025**

(51) International Patent Classification (IPC):
**G06F 1/32** *(2019.01)* **G06F 1/00** *(2006.01)*
**G06F 1/3206** *(2019.01)* **G06F 1/3234** *(2019.01)*
**G06F 11/30** *(2006.01)* **G06F 11/34** *(2006.01)*
**G06N 3/08** *(2023.01)*

(52) Cooperative Patent Classification (CPC):
**G06N 3/08; G06F 1/3206; G06F 1/3243;
G06F 11/3024; G06F 11/3062; G06F 11/3409;
G06N 3/045; G06N 3/063**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **09.04.2024 KR 20240048083
21.08.2024 KR 20240112334**

(71) Applicants:
• **Samsung Electronics Co., Ltd.**
**Suwon-si, Gyeonggi-do 16677 (KR)**
• **UIF (University Industry Foundation), Yonsei
University**
**Seoul 03722 (KR)**

(72) Inventors:
• **HWANG, Eunju**
**16677 Suwon-si (KR)**
• **SONG, William Jinho**
**Seoul (KR)**
• **PARK, Chanho**
**Seoul (KR)**
• **KIM, Euijun**
**Seoul (KR)**

(74) Representative: **Marks & Clerk LLP**
**15 Fetter Lane**
**London EC4A 1BW (GB)**

(54) **SYSTEM-ON-CHIP FOR PREDICTING POWER CONSUMPTION OF PROCESSOR AND MANAGING POWER SUPPLIED TO PROCESSOR AND OPERATING METHOD THEREOF**

(57) A system-on-chip (SoC) includes a first processor including a first performance monitor configured to perform monitoring on a plurality of first performance parameters including first performance parameters. The SoC also includes a power prediction circuit configured to predict a power consumption of the first processor based on count values of the first performance parameters collected by the first performance monitor, and a power management unit configured to manage power supplied to the first processor based on a prediction result of the power prediction circuit.

FIG. 2A

```
        START
          |
          v
┌────────────────────────────────┐
│ PERFORM COUNTING OPERATION ON   │
│ VALID PERFORMANCE PARAMETERS    │── S100A
│ AMONG PLURALITY OF PERFORMANCE  │
│ PARAMETERS OF PROCESSOR         │
└────────────────────────────────┘
          |
          v
┌────────────────────────────────┐
│ INPUT COUNT VALUES OF VALID     │
│ PERFORMANCE PARAMETERS TO       │── S110A
│ NEURAL NETWORK MODEL            │
└────────────────────────────────┘
          |
          v
┌────────────────────────────────┐
│ CONTROL POWER SUPPLIED TO       │
│ PROCESSOR, BASED ON OUTPUT OF   │── S120A
│ NEURAL NETWORK MODEL            │
└────────────────────────────────┘
          |
          v
        END
```

EP 4 632 533 A1

**Description**

BACKGROUND

The present disclosure relates to a system-on-chip (SoC) managing power supplied to a processor and an operating method thereof.

A SoC corresponding to a computer or an electronic system component integrated in an integrated circuit is a system including devices having various functions on a chip. For example, the SoC may include a major semiconductor device such as an operation device such as a processor, a memory device, and a digital signal processing device.

The processor may execute various applications to perform various operations. The processor requires power supply to perform operations, and the amount of power required varies depending on operations of the processor, and thus power management technology to appropriately supply the power required for the processor to operate is proposed.

SUMMARY

Embodiments provide a system-on-chip (SoC) that selectively uses count values of valid performance parameters among a plurality of performance parameters supported by a processor so as to accurately predict the power consumption of the processor without a separate hardware logic for measuring the power consumption of the processor, and an operating method thereof.

According to an aspect of the disclosure, a system-on-chip (SoC) includes: a first processor including a first performance monitor configured to perform monitoring on a plurality of first performance parameters including first performance parameters (e.g. a plurality of performance parameters including first performance parameters); a power prediction circuit configured to predict a power consumption of the first processor based on first count values of the first performance parameters collected by the first performance monitor; and a power management circuit configured to manage power supplied to the first processor, based on a prediction result of the power prediction circuit.

According to an aspect of the disclosure, a system-on-chip (SoC) includes: a first processor including a first performance monitor configured to perform monitoring on first performance parameters (e.g. first performance parameters selected from a set of performance parameters); a power prediction circuit configured to predict a power consumption of the first processor based on first count values of the first performance parameters collected by the first performance monitor; and a power management circuit configured to manage power supplied to the first processor, based on a prediction result of the power prediction circuit.

According to an aspect of the disclosure, the first core cluster is one of a big core cluster, a middle core cluster, and a little core cluster, and wherein the second core cluster is another one of the big core cluster, the middle core cluster, and the little core cluster. A big core cluster may be a set of high-performance processor cores optimized for maximum processing power, typically featuring high clock speeds and large caches, suitable for demanding computational tasks. A middle core cluster may be a set of balanced processor cores designed to provide a trade-off between performance and power efficiency, suitable for sustained workloads requiring moderate processing power. A little core cluster may be a set of low-power processor cores optimized for energy efficiency, suitable for background tasks and low-intensity operations to extend battery life and reduce power consumption. A big core cluster may have a larger power consumption and higher performance than the middle core cluster and the little core cluster. The middle core cluster may have a larger power consumption and higher performance than the little core cluster, and a lower power consumption and lower performance than the big core cluster.

According to an aspect of the disclosure, the first processor comprises one of a central processing unit (CPU), a graphic processing unit (GPU), a neural processing unit (NPU), and an image signal processor (ISP), and wherein the second processor comprises another one of the CPU, the GPU, the NPU, and the ISP.

According to an aspect of the disclosure, a method of operating a computing device for generating a neural network model predicting a power consumption of a processor, includes: performing a first counting operation on a plurality of performance parameters of the processor and a first measuring operation on the power consumption of the processor, in a first period during which a plurality of benchmark applications are executed by the processor; selecting first performance parameters from among the plurality of performance parameters based on a first result of the first counting operation and based on a second result of the first measuring operation; performing a second counting operation on the first performance parameters of the processor and a second measuring operation on the power consumption of the processor, in a second period during which a plurality of user applications are executed by the processor; and training the neural network model based on a third result of the second counting operation and based on a fourth result of the second measuring operation.

According to an aspect of the disclosure, the processor comprises a core cluster, the and core cluster comprises a plurality of cores, wherein the plurality of benchmark applications are configured to support an execution fixing function of the plurality of cores, and wherein the first result of the first counting operation comprises count values of the plurality of performance parameters corresponding to the plurality of cores.

According to an aspect of the disclosure, a number of the first performance parameters corresponds to a number of second performance parameters which are simultaneously monitored by the processor.

According to an aspect of the disclosure, the selecting of the first performance parameters comprises: generating first information indicating a first degree of correlation between the plurality of performance parameters based on first count values of the plurality of performance parameters; first filtering first selected performance parameters to obtain first filtered performance parameters, wherein the first filtered performance parameters have a degree of cross-correlation less than a first threshold among the plurality of performance parameters based on the first information; generating second information indicating a second degree of correlation between second count values of the first filtered performance parameters and the power consumption of the processor; and second filtering the first filtered performance parameters to obtain second filtered performance parameters, wherein the second filtered performance parameters have a third degree of correlation with the power consumption of the processor greater than or equal to a second threshold among the first filtered performance parameters based on the second information, and wherein the first performance parameters comprise the second filtered performance parameters.

According to an aspect of the disclosure, the training the neural network model comprises: performing first training based on a mean square error loss function; and performing second training based on a systematic loss function based on characteristics of the processor in a low power period or a high power period.

According to an aspect of the disclosure, a method of operating a system-on-chip (SoC) for managing power supplied to a processor, includes: collecting count values of performance parameters among a plurality of performance parameters of the processor; predicting a power consumption of the processor based on the count values and a neural network model; and controlling power supplied to the processor, based on a prediction result.

According to an aspect of the disclosure, the neural network model is constructed by sequentially performing a first training operation based on a first loss function and a second training operation based on a second loss function for compensating for: i) a first prediction error in a low power period of the processor of the neural network model trained by the first training operation, or ii) a second prediction error in a high power period of the processor of the neural network model trained by the first training operation.

According to an aspect of the disclosure, the first prediction error is related to the power consumption of the processor, the power consumption being predicted to be a negative value, and wherein the second prediction error is related to an amount of training data collected in the high power period of the processor, the amount of training data being less than a threshold amount.

According to an aspect of the disclosure, the method further comprises: predicting next count values based on the count values of the first performance parameters; predicting a next power consumption of the processor based on the predicted next count values; and performing power management regarding power to be supplied to the processor, based on the prediction result of the next power consumption.

According to an aspect of the disclosure there is provided a system for selecting first performance parameters for predicting power consumption in first processor, the system comprising one or more processors configured to: obtain measurement results for each of a plurality of performance parameters and power consumption values, wherein the measurement results and power consumption values are determined based on operations of the first processor; and select first performance parameters from the plurality of performance parameters, wherein the selected first performance parameters have a degree of cross-correlation less than a first threshold, and have a degree of correlation with the power consumption of the first processor greater than or equal to a second threshold.

According to an aspect of the disclosure there is provided a system for training a neural network to predict power consumption of a first processor based on first performance parameters of the first processor, the system comprising one or more processors configured to: obtain measurement results for each of the first performance parameters and power consumption values, wherein the measurement results and power consumption values are determined based on operations of the first processor; and train the neural network to predict power consumption of the first processor based on the first performance parameters, wherein the neural network model is trained using a first loss function based on prediction error (e.g. a mean square error loss function) and a second loss function based on systemic error (e.g. a systemic loss function).

At least some of the above and other features of the invention are set out in the claims.

BRIEF DESCRIPTION OF THE DRAWINGS

The above and/or other aspects of the disclosure will be more clearly understood from the following detailed description taken in conjunction with the accompanying drawings, in which:

FIG. 1 is a block diagram schematically illustrating a system-on-chip (SoC) according to an embodiment;
FIGS. 2A and 2B are flowcharts for describing a method of predicting power consumption of a processor of a SoC according to an embodiment;

FIGS. 3A and 3B are block diagrams for describing an operation of a power prediction circuit according to an embodiment;

FIG. 4 is a flowchart illustrating a method of predicting power consumption of a processor of a SoC according to an embodiment;

FIG. 5 is a block diagram for describing an operation of a power prediction circuit according to an embodiment;

FIG. 6 is a diagram for describing a method of operating a SoC according to an embodiment;

FIGS. 7A and 7B are block diagrams illustrating a processor according to an embodiment;

FIG. 8 is a block diagram illustrating a processor according to an embodiment;

FIG. 9 is a flowchart illustrating a method of operating a device constructing a neural network model for predicting power consumption of a processor according to an embodiment;

FIG. 10 is a flowchart for describing a specific embodiment of operation S300 of FIG. 9;

FIG. 11 is a flowchart for describing a specific embodiment of operation S306 of FIG. 10;

FIG. 12 is a diagram for describing a method of selecting valid performance parameters according to an embodiment;

FIG. 13 is a flowchart for describing a specific embodiment of operation S310 of FIG. 9;

FIG. 14 is a flowchart for describing a specific embodiment of operation S320 of FIG. 9;

FIG. 15 is a block diagram illustrating a SoC according to an embodiment; and

FIG. 16 is a block diagram illustrating an electronic device according to an embodiment.

DETAILED DESCRIPTION OF THE EMBODIMENTS

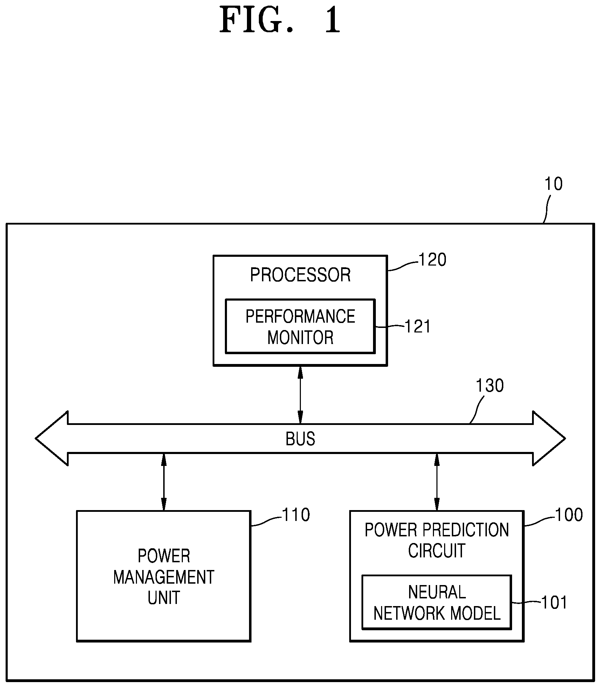

FIG. 1 is a block diagram schematically illustrating a system-on-chip (SoC) 10 according to an embodiment.

Referring to FIG. 1, the SoC 10 may be included in a mobile phone, a smartphone, a tablet personal computer (PC), a digital camera, a handheld game console, or a handheld device such as an e-book or a wearable device, which are electronic devices. Embodiments described below focus on the configuration of the SoC 10, but embodiments are not limited thereto, and it is fully understood that the disclosure may be applied to various electronic devices including a computing device such as a processor.

In an embodiment, the SoC 10 may include a power prediction circuit 100, a power management unit 110 (also referred to as a power management circuit), a processor 120, and a bus 130. In addition to the components shown in FIG. 1, the SoC 10 may further include additional components. In some embodiments, a power management integrated circuit (PMIC) supporting the function of the power management unit 110 may be implemented outside the SoC 10 to replace the power management unit 110.

In an embodiment, the processor 120 may process or execute programs and/or data, and may be various types of operation device such as a central processing unit (CPU), a graphics processing unit (GPU), a natural network processing unit (NPU), or an image signal processor (ISP). In addition, the processor 120 may be implemented as a multi-core processor. The multi-core processor is a single computing component having two or more independent substantial cores, and each of the cores may execute a program to perform an operation. Herein, a program and an application as targets executed by the processor 120 may be interchangeable. The performance monitor 121 may be implemented by circuits and/or software of the processor 120.

In an embodiment, the power management unit 110 may perform an operation of managing power required to drive the components of the SoC 10. As a specific example, the power management unit 110 may supply the processor 120 with power required for the processor 120 to process or execute programs and/or data. The power management unit 110 may be implemented with a CPU, GPU, NPU, ISP, custom hardware and/or software.

In an embodiment, the power management unit 110 may adjust power based on the power consumption of the processor 120 predicted by the power prediction circuit 100, and supply the adjusted power to the processor 120. For example, the power management unit 110 may adjust the power supplied to the processor 120 by adjusting at least one of an operating voltage, an operating frequency, or a current applied to the processor 120. In some embodiments, the operating frequency applied to the processor 120 may be adjusted by a clock management unit.

Hereinafter, a method of predicting the power consumption of the processor 120 of the power prediction circuit 100 will be described. Prior to the description, the processor 120 may include a performance monitor 121, and the performance monitor 121 may monitor a performance or operation problem of the processor 120. Specifically, the performance monitor 121 may perform a counting operation on a plurality of performance parameters of the processor 120 to collect hardware events (or count values) corresponding to the plurality of performance parameters of the processor 120 by using registers. The count values of the plurality of performance parameters collected in the registers may indicate the performance of the processor 120 in various aspects. The count values may indicate a number of instances of a given event (e.g. over a period of time). For instance, each count value may indicate a number of instances of an action or operation performed by the processor 120. For example, the plurality of performance parameters may include a parameter regarding the number of memory accesses, a parameter regarding the number of executed instructions, a parameter regarding the number of clock cycles, etc. On the other hand, the number of registers supported by the performance monitor 121 may be limited, and accordingly, the number of performance parameters counted simultaneously among the plurality of performance parameters and collected in the registers may match the number of registers.

In an embodiment, the power prediction circuit 100 may predict the power consumption of the processor 120 based on count values of valid performance parameters among the plurality of performance parameters which are targets monitored by the performance monitor 121. Herein, the valid performance parameter may be previously selected from the plurality of performance parameters so that the power prediction circuit 100 is used to predict the power consumption of the processor 120. The valid performance parameters, in some embodiments, are thus pre-selected performance parameters used for power prediction, and may be simply referred to as performance parameters.

In some embodiments, the performance monitor 121 may include a measurement circuit to measure at least one of an operating frequency, an operating voltage, or a temperature of the processor 120 through the measurement circuit, and the power prediction circuit 100 may predict the power consumption of the processor 120 further based on a measurement result by the performance monitor 121. However, this is only an embodiment, and the measurement circuit may be implemented as hardware separate from the performance monitor 121. A specific embodiment in this regard will be described below.

In an embodiment, the number of valid performance parameters may be based on the number of registers supported by the performance monitor 121. For example, when the number of registers supported by the performance monitor 121 is 'A (where A is an integer greater than or equal to two), the number of valid performance parameters may be less than or equal to 'A'. In addition, as an embodiment, the valid performance parameters may have a degree of cross-correlation less than a first threshold, and have a degree of correlation with the power consumption of the processor 120 greater than or equal to a second threshold. A specific embodiment in which valid performance parameters are selected will be described below.

In an embodiment, the performance monitor 121 may perform a counting operation on the valid performance parameters of the processor 120 to collect the count values of the valid performance parameters through the registers, and the power prediction circuit 100 may obtain the count values of the valid performance parameters from the registers of the performance monitor 121. In some embodiments, the power prediction circuit 100 may further obtain at least one of the operating frequency, the operating voltage, or the temperature of the processor 120 measured by the performance monitor 121. The power prediction circuit 100 may predict the power consumption of the processor 120 based on information obtained from the performance monitor 121.

As an embodiment, the power prediction circuit 100 includes a neural network model 101 and may predict the power consumption of the processor 120 by using the neural network model 101. For example, the power prediction circuit 100 may input the count values of valid performance parameters to the neural network model 101 and predict the power consumption of the processor 120 based on a value output from the neural network model 101. As a specific example, the output of the neural network model 101 may indicate the predicted power consumption of the processor 120, and the power prediction circuit 100 may confirm the predicted power consumption of the processor 120 through the output of the neural network model 101. The neural network model 101 may be implemented using a CPU, GPU, NPU, ISP, custom hardware and/or software.

In an embodiment, the power prediction circuit 100 may provide information about the predicted power consumption of the processor 120 to the power management unit 110. The power management unit 110 may manage power supplied to the processor 120, based on the information provided from the power prediction circuit 100.

In addition, as an embodiment, the power prediction circuit 100 may predict next count values based on the count values of the valid performance parameters, and predict the next power consumption of the processor 120 based on the predicted next count values. As an embodiment, the power management unit 110 may prepare power to be supplied to the processor 120, based on the power consumption predicted by the power prediction circuit 100. Preparing power generally refers to scheduling power, scheduling a restriction of power, or planning power management. A specific embodiment in this regard will be described below.

Hereinafter, an embodiment in which valid performance parameters are selected from the plurality of performance parameters is schematically described. In the embodiment, it is assumed to be performed for configuration of the processor 120 in a mass production stage of the SoC 10.

In order to monitor the performance of the processor 120, the performance monitor 121 may perform the counting operation on the plurality of performance parameters to generate the count values and store the count values in the registers. However, because the number of registers of the performance monitor 121 is limited, the counting operation on some of the plurality of performance parameters may be performed simultaneously.

In an embodiment, the number of valid performance parameters may be selected based on the number of registers of the performance monitor 121. That is, for an accurate operation of the power prediction circuit 100, it may be important to select the valid performance parameters considering the number of performance parameters that may be monitored simultaneously by the performance monitor 121. **In** an embodiment, the number of valid performance parameters may correspond to a number of performance parameters which are simultaneously monitored by the performance monitor 121.

**In** an embodiment, in order to select the valid performance parameters, the processor 120 may be controlled by a device. **In** addition, the device may be for constructing (e.g. generating and/or training) the neural network model 101. The device may control a plurality of prepared benchmark applications to be sequentially executed by the processor 120 and collect test count values of the plurality of performance parameters generated by the performance monitor 121 in a period in which the plurality of benchmark applications are executed. That is, the valid performance parameters may be selected from among the plurality of performance parameters based on the test count values of the plurality of performance parameters generated by the performance monitor 121 by executing the plurality of benchmark applications by the processor 120. The device may further collect power consumption values of the processor 120 corresponding to the test count values of the plurality of performance parameters. For example, hardware logic for measuring the power consumption of the processor 120 may be provided only in the mass production stage, and the actual power consumption of the processor 120 corresponding to the test count values of the plurality of performance parameters may be measured through the hardware logic. The hardware logic may also be used to construct the neural network model 101 in the future. In some embodiments, the hardware logic may be removed from the processor 120 or the SoC 10 after the mass production stage.

Herein, a benchmark application may be defined as an application made to allow the processor 120 to repeatedly perform a specific operation in order to confirm a specific performance of the processor 120. For example, the benchmark application may be a specialized application to confirm any one of an arithmetic and logical unit (ALU)-related performance, a memory access-related performance, and a comprehensive performance of the processor 120. In addition, as an embodiment, the benchmark application may support an execution fixing function. The execution fixing function is applicable even when the processor 120 includes a plurality of cores, and a detailed description thereof will be given below.

As an embodiment, the device may select the valid performance parameters based on the test count values of the plurality of performance parameters obtained from the performance monitor 121. First, the device may generate first information indicating the degrees of correlation between the plurality of performance parameters based on the test count values. Specifically, the device may generate the first information by analyzing an increase/decrease pattern of the test count values of the plurality of performance parameters. Thereafter, the device may perform first filtering on performance parameters having the degree of cross-correlation less than the first threshold among the plurality of performance parameters based on the first information. In some embodiments, the device may further use at least one of the operating voltage, the operating frequency, or the temperature of the processor 120 measured by the performance monitor 121 to confirm the degrees of correlation between the plurality of performance parameters.

In an embodiment, the device may generate second information indicating degrees of correlation between the count values of the first filtered performance parameters and the power consumption of the processor 120 corresponding thereto. Specifically, the device may generate the second information by analyzing an increase/decrease pattern of the count values of the first filtered performance parameters and an increase/decrease pattern of the actual measured power consumption values of the processor 120. Thereafter, the device may perform second filtering on the performance parameters each having the degree of correlation with the power consumption of the processor 120 equal to or greater than the second threshold among the first filtered performance parameters based on the second information. The device may select the second filtered performance parameters as the valid performance parameters.

As described above, the valid performance parameters have a low degree of cross-correlation and a high degree of correlation with the power consumption of the processor 120, and thus, the accuracy of a power consumption prediction operation of the power prediction circuit 100 may be increased.

Hereinafter, an embodiment in which the neural network model 101 is trained is schematically described. In the embodiment, it is assumed that the training is performed for construction of the neural network model 101 in the mass production stage of the SoC 10.

In an embodiment, the processor 120 may be controlled by the device for constructing the neural network model 101. The device may control a plurality of prepared user applications to be sequentially executed by the processor 120 and collect training count values of the plurality of valid performance parameters generated by the performance monitor 121 in a period in which the plurality of user applications are executed. In addition, the device may further collect power consumption values of the processor 120 corresponding to the collected training count values. The power consumption of the processor 120 may be directly measured by the hardware logic described above. In some embodiments, the device may further collect training measurement values of at least one of the operating voltage, the operating frequency, or the temperature of the processor 120 corresponding to the collected training count values and use the values in training on the neural network model 101. Herein, the user application may be defined as an application that may be executed by user's needs after the SoC 10 is mass-produced and mounted on an electronic device.

In an embodiment, the device may perform first training based on the collected training count values, the collected power consumption values, and a first loss function. For example, the first loss function may include a mean square error loss function. Thereafter, the device may finally construct the neural network model 101 preliminarily constructed through first training by performing second training on the neural network model 101 based on a second loss function based on characteristics in a low power period and/or a high power period. A lower power period may be a period in which power consumption is lower than the power consumption in a high power period. For example, the second loss function may include a systematic loss function. The second loss function may be a function defined to compensate for a first prediction error occurring based on use of the first loss function in the low power period of the processor 120 or a second prediction error occurring based on use of the first loss function in the high power period. Specifically, the first prediction error may be related to the preliminarily constructed neural network model 101 predicting the power consumption of the processor 120 as a negative value in the low power period, and the second prediction error may be related to the amount of training data collected in the high power period of the processor 120 being less than a threshold amount. For example, the mean square error loss function may be defined as [Equation 1], and the systematic loss function may be defined as [Equation 2].

[Equation 1]

$$\mathcal{L}_{\mathrm{MSE}} = \frac{1}{J} \sum_{i=1}^{J} ((y_i - \hat{y}_i)^2)$$

$y_i$ denotes a target value (e.g. a collected (e.g. measured) power consumption value), and $\hat{y}_i$ denotes a value (e.g. a power consumption value) predicted by the neural network model 101 (e.g. based on training count values being input into the neural network model 101), and an $\mathcal{L}_{\mathrm{MSE}}$ value (e.g. a mean square error loss value) for adjusting artificial intelligence parameters of the neural network model 101 may be generated in the first training through an operation by [Equation 1]. For example, J may denote a number of the collected training count values (e.g. the number of collected power consumption values).

[Equation 2]

$$\mathcal{L}_{\mathrm{sys}} = \frac{1}{J} \sum_{i=1}^{J} \left( \lambda_{\mathrm{exp}} e^{(a_{\mathrm{exp}} y_i)} (y_i - \hat{y}_i)^2 + \lambda_{\mathrm{neg}} \max(0, -\hat{y}_i) \right)$$

$\lambda_{\mathrm{exp}} e^{(a_{\mathrm{exp}} y_i)}(y_i - \hat{y}_i)^2$ may be an operation for compensating for the second prediction error in the high power period, and $\lambda_{\mathrm{neg}} \max(0, -\hat{y}_i)$ may be an operation for compensating for the first prediction error in the low power period. $\lambda_{\mathrm{exp}}$, $\lambda_{\mathrm{neg}}$, and $a_{\mathrm{exp}}$ may be preset values to validly compensate for the first prediction error and the second prediction error. Specifically, the second loss function may compensate for the large occurrence of the second prediction error in the high power period through $\lambda_{\mathrm{exp}} e^{(a_{\mathrm{exp}} y_i)}(y_i - \hat{y}_i)^2$, and compensate for the first prediction error caused by predicting power consumption having the negative value in the low power period through $\lambda_{\mathrm{neg}} \max(0, -\hat{y}_i)$. $y_i$ denotes the target value, and $\hat{y}_i$ denotes the value predicted by the neural network model 101, and the $\mathcal{L}_{\mathrm{sys}}$ value (e.g. the systemic loss value) for adjusting artificial intelligence parameters of the neural network model 101 may be generated in the second training through an operation by [Equation 2].

Training the neural network model 101 may involve updating the parameters of the neural network model 101 based on the calculated loss values. For instance, the parameters may be updated based on an optimization step that adjusts the parameters to minimize the loss. For instance, a first training process may be performed in which the parameters are updated to minimize the mean square error loss. A second training process may be performed in which the parameters are updated to minimize the systemic loss. Alternatively, training may be performed based on a cumulative loss, that is determined based on both the mean square error loss and the systemic loss (e.g. via a weighted sum). Accordingly, the training may update the parameters to minimize the cumulative loss. Updating the parameters may be performed via backpropagation. Optimization may be via gradient descent, or any other appropriate optimization method. After each update, new predictions may be determined based on the updated parameters, for use in further training updates. Multiple training updates may be performed until an end criteria is met (e.g. a minimum performance (e.g. based on evaluating the performance of the neural network on evaluation data including parameter count values and power consumption values)).

As an embodiment, the finally constructed neural network model 101 may be stored in a memory of the SoC 10, and the neural network model 101 may be driven by the power prediction circuit 100. The neural network model 101 may be used by the power prediction circuit 100 to predict the power consumption of the processor 120.

The SoC 10 according to an embodiment may accurately predict the power consumption of the processor 120 by using the count values of valid performance parameters selected from the plurality of performance parameters, without separate hardware logic for measuring the power consumption of the processor 120. Accordingly, due to the absence of the hardware logic for measuring the power consumption, the design space of the processor 120 may be further secured, and the circuit design flexibility of the processor 120 may be improved.

The SoC 10 according to an embodiment may accurately predict the power consumption of the processor 120 by using the neural network model 101 trained based on the valid performance parameters optimally selected to predict the power consumption of the processor 120 and the loss function considering the characteristics of the processor 120 in the low power period and/or the high power period. Based on a prediction result, an appropriate amount of power may be supplied to the processor 120 so that the operating performance of the processor 120 may be improved.

In addition, the SoC 10 according to an embodiment may preemptively determine the amount of power required for the processor 120 by predicting the next count values based on the count values of the valid performance parameters and previously predicting the next power consumption of the processor 120 based on the predicted next count values. This may be helpful in the overall power management of the SoC 10.

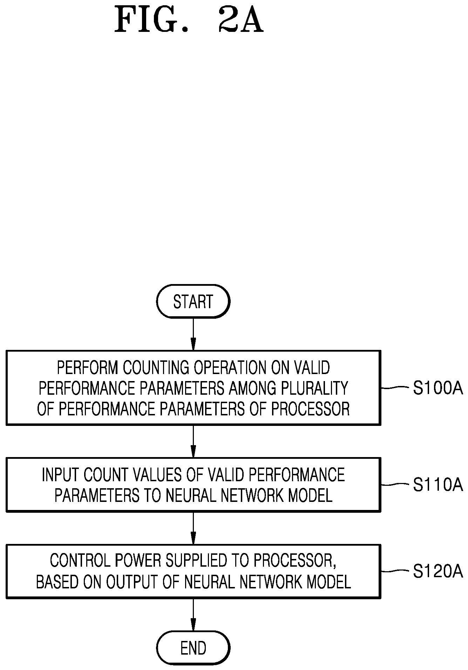

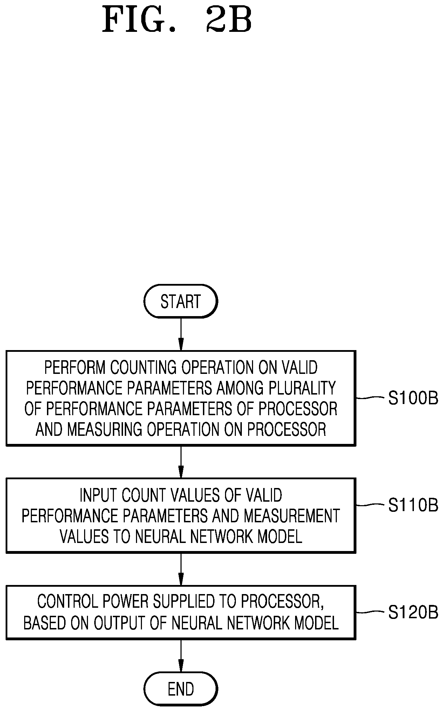

FIGS. 2A and 2B are flowcharts for describing a method of predicting power consumption of a processor of a SoC according to an embodiment.

Referring to FIG. 2A, in operation S 100A, a performance monitor of a processor may perform a counting operation on valid performance parameters among a plurality of performance parameters of the processor. For example, the performance monitor may simultaneously perform a counting operation on the valid performance parameters by using registers matching the number of valid performance parameters, and store count values generated through the counting operation in the registers. For example, the registers may be allocated one-to-one with the valid performance parameters to store the count values of the valid performance parameters allocated thereto. In some embodiments, at least one of the registers may not be allocated with a valid performance parameter and may dynamically store a count value of a performance parameter requested by any component in the SoC.

In operation S110A, a power prediction circuit may input the count values of the valid performance parameters to a neural network model. For example, the power prediction circuit may preprocess the count values of the valid performance parameters to conform to an input format of the neural network model. The neural network model of operation S110A may be constructed by training based on training count values of the valid performance parameters. For instance, the neural network model of operation S110A may be constructed by training based on training count values of the valid performance parameters as well as training (e.g. measured) power consumption values corresponding to the training count values.

In operation S120A, a power management unit may control power supplied to the processor, based on an output of the neural network model. For example, the power prediction circuit may transmit the output of the neural network model to the power management unit. The power management unit may adjust the power supplied to the processor based on the output of the neural network (e.g. based on the predicted power consumption).

Referring further to FIG. 2B, in operation S100B, the performance monitor of the processor may perform the counting operation on the valid performance parameters among the plurality of performance parameters of the processor and a measuring operation on the processor. For example, the performance monitor may measure at least one of an operation frequency, an operation voltage, or a temperature of the processor.

In operation S110B, the power prediction circuit may input the count values of the valid performance parameters and measurement values to the neural network model. The neural network model in operation S110B may be constructed by training based on the training count values of the valid performance parameters, the power consumption of the processor corresponding thereto, and training measurement values of at least one of an operating frequency, an operating voltage, or a temperature of the processor.

In operation S 120B, the power management unit may control the power supplied to the processor, based on the output of the neural network model.

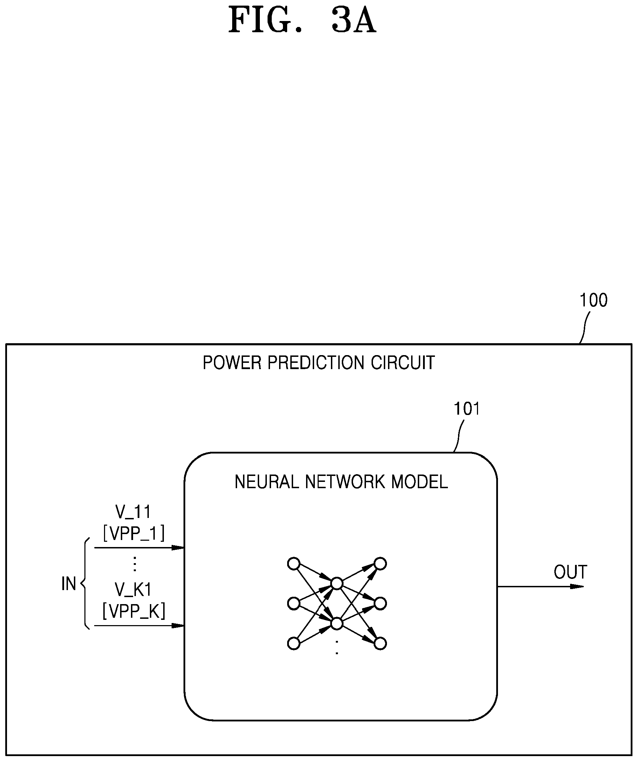

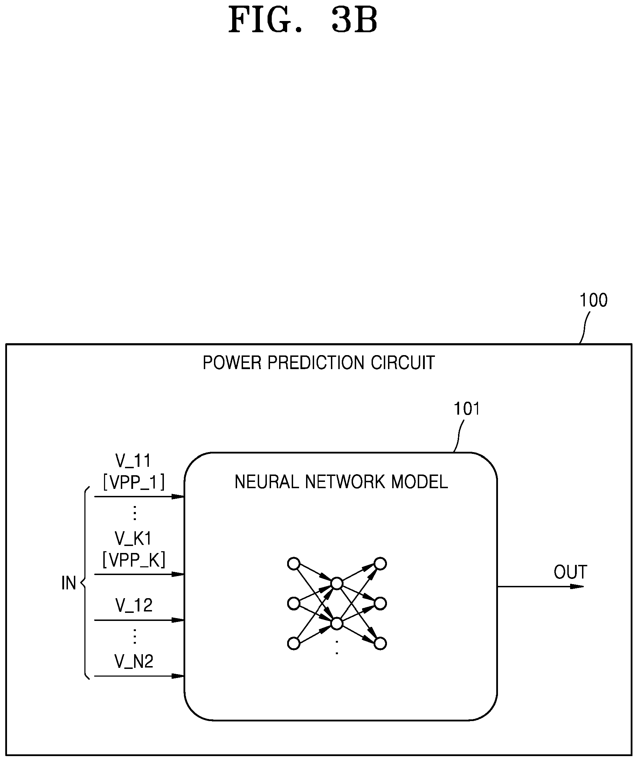

FIGS. 3A and 3B are block diagrams for describing an operation of the power prediction circuit 100 according to an embodiment.

Referring to FIG. 3A, the power prediction circuit 100 may input count values $V\_11$ to $V\_K1$ of 'K' valid performance parameters VPP_1 to VPP_K as an input signal IN to the neural network model 101. The power prediction circuit 100 may predict power consumption of a processor based on an output signal OUT of the neural network model 101.

Referring further to FIG. 3B, the power prediction circuit 100 may input the count values $V\_11$ to $VPP\_K1$ of the 'K' valid performance parameters VPP_1 to VPP_K and 'N' measurement values $V\_12$ to $V\_N2$ as the input signal IN to the neural network model 101. For example, the 'N' measurement values $V\_12$ to $V\_N2$ may include a measurement value of at least one of an operating frequency, an operating voltage, or a temperature of the processor. The power prediction circuit 100 may predict power consumption of the processor based on the output signal OUT of the neural network model 101.

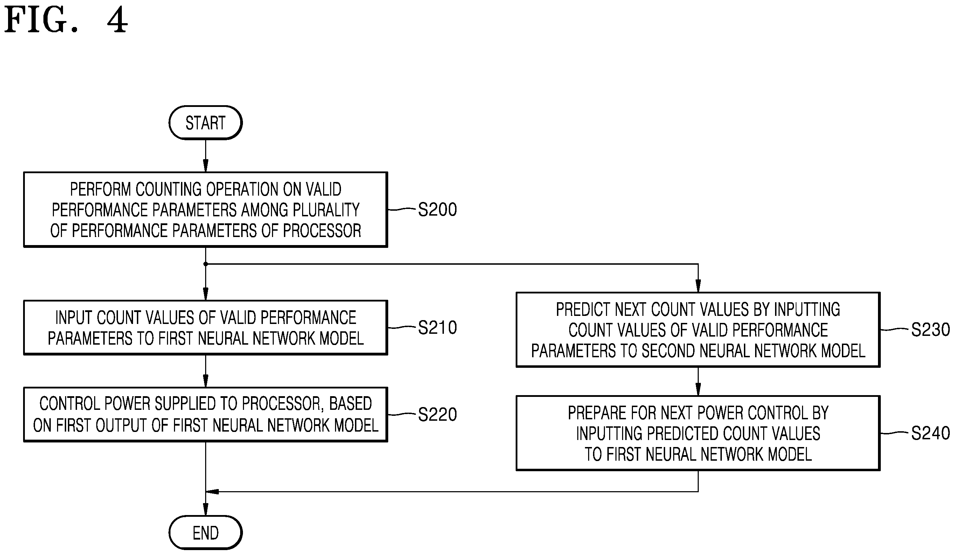

FIG. 4 is a flowchart illustrating a method of predicting power consumption of a processor of a SoC according to an embodiment.

Referring to FIG. 4, in operation S200, a performance monitor of the processor may perform a counting operation on valid performance parameters among a plurality of performance parameters of the processor.

In operation S210, a power prediction circuit may input count values of the valid performance parameters to a first neural network model. Herein, the first neural network model refers to a neural network model constructed to predict the power consumption of the processor.

In operation S220, a power management unit may control power supplied to the processor, based on a first output of the first neural network model.

Operations S230 and S240 may be performed in parallel with operations S210 and S220.

In operation S230, the power prediction circuit may predict next count values by inputting the count values of the valid performance parameters to a second neural network model. Herein, the second neural network model refers to a neural network model constructed (e.g. trained) to predict the next count values based on the count values of the valid performance parameters.

In operation S240, the power prediction circuit may prepare for next power control by inputting the predicted count values to the first neural network model. For example, the power prediction circuit may provide a second output of the first neural network model to the power management unit in response to an input of the predicted count values. The power management unit may prepare to supply power to the processor by previously recognizing the amount of power predicted to be required by the processor based on the provided second output. That is, the power management unit may adjust the level of the supply voltage in advance so that the supply voltage matches the amount of power predicted.

The second neural network model may be trained based on measured count values using a loss function (e.g. based on prediction error). For instance, for each of a series of time steps, measured count values for that time step may be input into the second neural network model and predicted count values may be determined for the next time step. The predicted count values for the next time step may be compared to the measured count values for the next time step to determine a loss. For instance, a cumulative error (e.g. a mean square error) over the time steps may be determined. The loss may be used to update the parameters of the second neural network model (e.g. to minimize the loss).

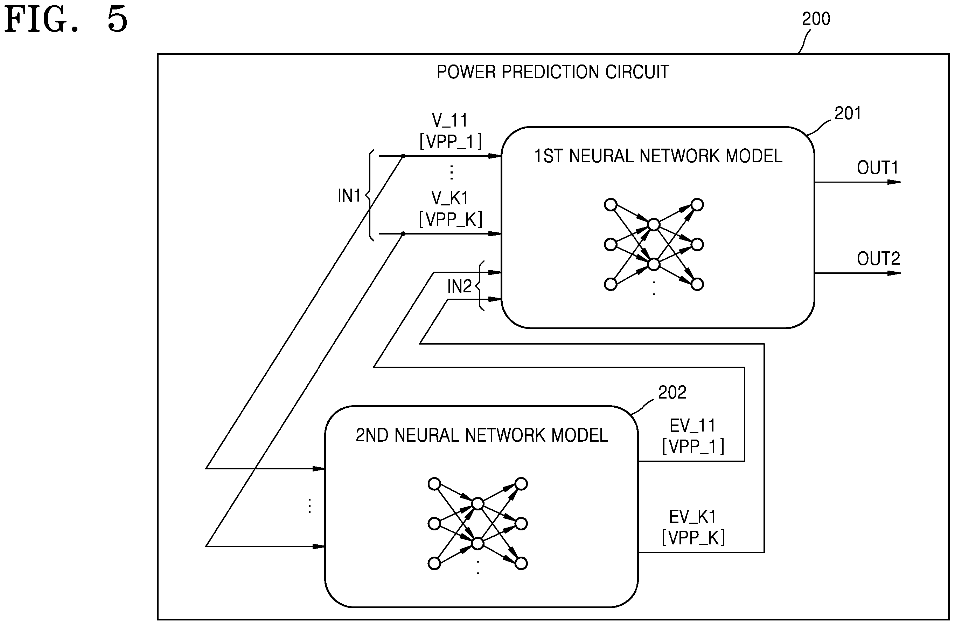

FIG. 5 is a block diagram for describing an operation of a power prediction circuit 200 according to an embodiment.

Referring to FIG. 5, the power prediction circuit 200 may input the count values V_11 to V_K1 of the 'K' valid performance parameters VPP_1 to VPP_K to each of a first neural network model 201 and a second neural network model 202 as the input signal IN.

The first neural network model 201 may output a first output signal OUT1 in response to the count values V_11 to V_K1, and the power prediction circuit 200 may predict current power consumption of a processor based on the first output signal OUT1.

The second neural network model 202 may output predicted count values EV_11 to EV_K1 of the 'K' valid performance parameters VPP_1 to VPP_K in response to the count values V_11 to V_K1. The predicted count values EV_11 to EV_K1 may be input to the first neural network model 201 as a second input signal IN2.

The first neural network model 201 may output a second output signal OUT2 in response to the predicted count values EV_11 to EV_K1, and the power prediction circuit 200 may predict the next power consumption of the processor based on the second output signal OUT2.

The power prediction circuit 200 may continuously predict the power consumption of the processor by inputting the predicted count values EV_11 to EV_K1 to the second neural network model 202, generating further future predicted count values, and inputting the predicted count values to the first neural network model 201.

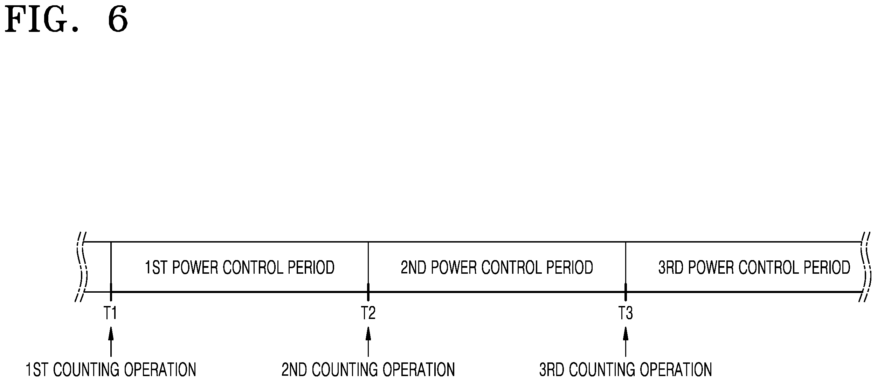

FIG. 6 is a diagram for describing a method of operating a SoC according to an embodiment. To help understand FIG. 6, FIG. 6 is described further with reference to FIG. 5.

Referring to FIG. 6, the power prediction circuit 200 may predict the power consumption of a processor in a first power control period based on first count values of valid performance parameters generated through a first counting operation at a 'T1' time. For example, the power prediction circuit 200 may continuously generate predicted count values for predicting the power consumption of the processor in the first power control period by using the first count values and the second neural network model 202. As a specific example, the power prediction circuit 200 may predict the power consumption of the processor in the first power control period by generating other predicted count values with the predicted count values by re-inputting an output of the second neural network model 202 into the second neural network model 202. This can result in predicted count values for the duration of the first power control period. The power consumption across the first power control period can be predicted by inputting the predicted count values into the first neural network model 201. In the first power control period corresponding to the first counting operation, a power management unit may receive information about the power consumption of the processor predicted by the power prediction circuit 200 and manage power supplied to the processor.

The power prediction circuit 200 may predict the power consumption of the processor in a second power control period based on second count values of the valid performance parameters generated through a second counting operation at a 'T2' time. In some embodiments, the power prediction circuit 200 may compare the count values last predicted in the first power control period with the second count values and adjust the length of the second power control period based on a comparison result. For instance, the length of the second power control period may be reduced based on a large difference (e.g. a difference exceeding a threshold) between the count values last predicted in the first power control period and the second count values. For instance, the length of the second power control period may be reduced in response to the difference exceeding a threshold. In addition or alternatively, the amount that the length of the second power control period is reduced by may increase with increasing difference between the count values last predicted in the first power control period and the second count values. For example, the power prediction circuit 200 may continuously generate predicted count values for predicting the power consumption of the processor in the second power control period by using the second count values and the second neural network model 202. In the second power control period corresponding to the second counting operation, the power management unit may receive information about the power consumption of the processor predicted by the power prediction circuit 200 and manage power supplied to the processor.

The power prediction circuit 200 may predict the power consumption of the processor in a third power control period based on third count values of the valid performance parameters generated through a third counting operation at a 'T3' time. In some embodiments, the power prediction circuit 200 may compare the count values last predicted in the second power control period with the third count values and adjust the length of the third power control period based on a comparison result. For instance, the length of the third power control period may be reduced based on a large difference (e.g. a difference exceeding a threshold) between the count values last predicted in the second power control period and the third count values. For instance, the length of the third power control period may be reduced in response to the difference exceeding a threshold. In addition or alternatively, the amount that the length of the third power control period is reduced by may increase with increasing difference between the count values last predicted in the second power control period and the third count values. For example, the power prediction circuit 200 may continuously generate predicted count values for predicting the power consumption of the processor in the third power control period, by using the third count values and the second neural network model 202. In the third power control period corresponding to the third counting operation, the power management unit may receive information about the power consumption of the processor predicted by the power prediction circuit 200 and manage power supplied to the processor.

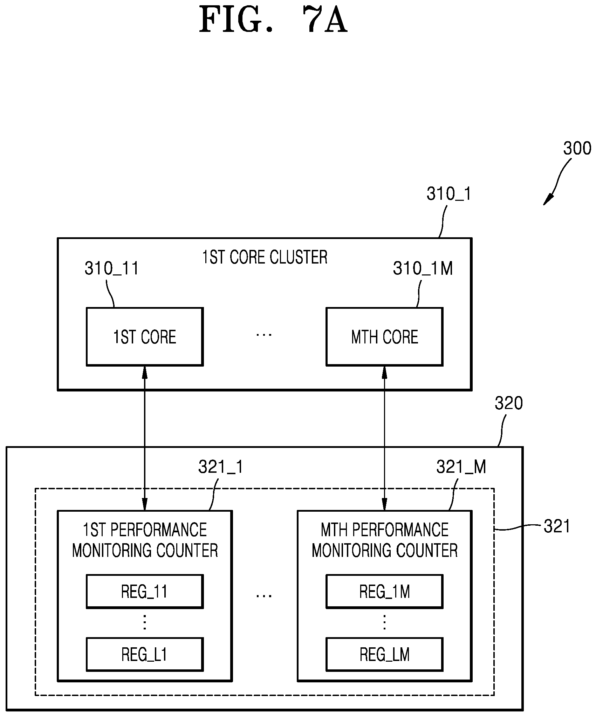

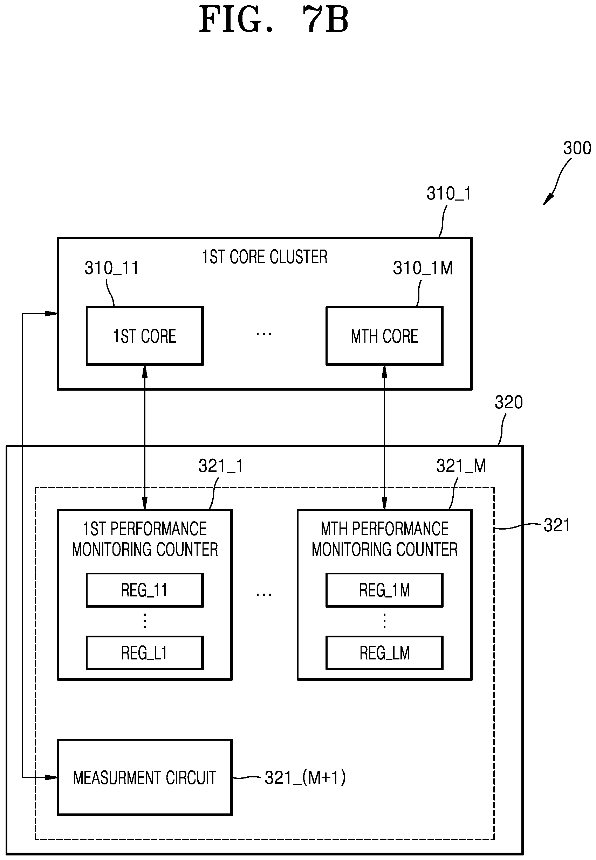

FIGS. 7A and 7B are block diagrams illustrating a processor 300 according to an embodiment.

Referring to FIG. 7A, the processor 300 may include a first core cluster 310_1 and a performance monitor 320. The first core cluster 310_1 may include first to Mth cores 310_11 to 310_1M (where M is an integer of 2 or more). The performance monitor 320 may include a first performance monitoring circuit 321 including first to Mth performance monitoring counters 321_1 to 321_M. For example, the first performance monitoring counter 321_1 and the Mth performance monitoring counter 321_M may each include 'L' registers REG_11 to REG_L1 and REG_1M to REG_LM (where L is an integer greater than or equal to one). Each of second to M-1 performance monitoring counters 321_2 to 321_M-1 may also include the 'L' registers. The first to Mth cores 310_11 to 310_1M and the first to Mth performance monitoring counters 321_1 to 321_M may correspond one-to-one.

In an embodiment, power may be managed in units of core clusters, and accordingly, valid performance parameters may be selected in units of core clusters. That is, first valid performance parameters may be selected from among a plurality of performance parameters in order to predict the power consumption of the first core cluster 310_1. However, embodiments are not limited thereto, and the disclosure may be applied even under conditions in which power is managed in units of cores and valid performance parameters are selected in units of cores.

In an embodiment, in order to predict the power consumption of the first core cluster 310_1, the first performance monitoring counter 321_1 may perform a counting operation on first valid performance parameters of the first core 310_11. The first performance monitoring counter 321_1 may store count values of the first valid performance parameters of the first core 310_11 in the 'L' registers REG_11 to REG_L1 at a time. As such, the second to Mth performance monitoring counters 321_2 to 321_M may perform the counting operation on the first valid performance parameters of the second to Mth cores 310_12 to 310_1M.

In an embodiment, the count values stored in the first to Mth performance monitoring counters 321_1 to 321_M may be provided to a power prediction circuit, and the power prediction circuit may predict the power consumption of the first core cluster 310_1 based on the provided count values. For example, the power prediction circuit may sum up or average (or perform a neural network operation on) the count values provided from the first to Mth performance monitoring counters 321_1 to 321_M, and predict the power consumption of the first core cluster 310_1 based on a calculation result.

In an embodiment, the first to Mth performance monitoring counters 321_1 to 321_M may be used to select first valid performance parameters in a mass production stage of the SoC, and may be used to construct a neural network model for predicting the power consumption of the first core cluster 310_1.

Referring further to FIG. 7B, a first performance monitoring circuit 321 may further include a measurement circuit 321_(M+1) for measuring at least one of an operating frequency, an operating voltage, or a temperature of the first core cluster 310_1. In some embodiments, the measurement circuit 321_(M+1) may be implemented as hardware separated from the performance monitor 320.

As an embodiment, measurement values generated by the measurement circuit 321_(M+1) may be additionally used to predict the power consumption of the first core cluster 310_1. In addition, in an embodiment, the measurement values generated by the measurement circuit 321_(M+1) may be additionally used to select the first valid performance parameters in the mass production stage of the SoC, and may be additionally used to construct the neural network model for predicting the power consumption of the first core cluster 310_1.

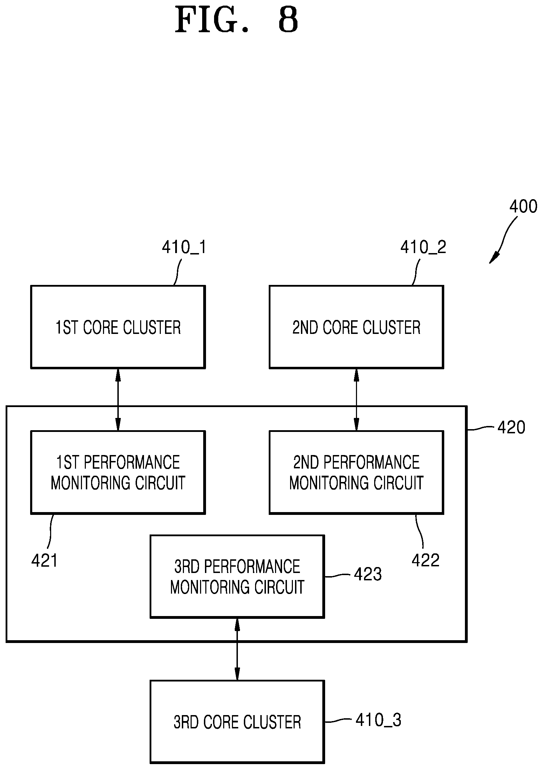

FIG. 8 is a block diagram illustrating a processor 400 according to an embodiment.

Referring to FIG. 8, the processor 400 may include first to third core clusters 410_1 to 410_3 and a performance monitor 420. The performance monitor 420 may include first to third performance monitoring circuits 421 to 423. The first performance monitoring circuit 421 may be a circuit for monitoring the performance of the first core cluster 410_1, the second performance monitoring circuit 422 may be a circuit for monitoring the performance of the second core cluster 410_2, and the third performance monitoring circuit 423 may be a circuit for monitoring the performance of the third core cluster 410_3.

In an embodiment, first valid performance parameters may be selected to predict the power consumption of the first core cluster 410_1, second valid performance parameters may be selected to predict the power consumption of the second core cluster 410_2, and third valid performance parameters may be selected to predict the power consumption of the third core cluster 410_3.

In an embodiment, the first performance monitoring circuit 421 may perform a counting operation on the first valid performance parameters of the first core cluster 410_1 to generate count values of the first valid performance parameters, and a power prediction circuit may predict the power consumption of the first core cluster 410_1 based on the count values of the first valid performance parameters.

In an embodiment, the second performance monitoring circuit 422 may perform the counting operation on the second valid performance parameters of the second core cluster 410_2 to generate count values of the second valid performance parameters, and the power prediction circuit may predict the power consumption of the second core cluster 410_2 based on the count values of the second valid performance parameters.

In addition, in an embodiment, the third performance monitoring circuit 423 may perform the counting operation on the third valid performance parameters of the third core cluster 410_3 to generate count values of the third valid performance parameters, and the power prediction circuit may predict the power consumption of the third core cluster 410_3 based on the count values of the third valid performance parameters.

In an embodiment, the first to third core clusters 410_1 to 410_3 may be designed to have different data processing speeds (or performance parameters). For example, the first core cluster 410_1 may be designed as a big core cluster, the second core cluster 410_2 may be designed as a middle core cluster, and the third core cluster 410_3 may be designed as a little core cluster. For example, big core is a powerful core that processes tasks that require high performance, and is designed primarily to handle multitasking and high-load tasks. A middle core is a core that provides performance between big core and little core, and is designed to achieve balanced performance and power consumption. Little core is a low-power core that is power-efficient and processes light tasks, and is designed to reduce battery consumption. In this case, the first to third valid performance parameters may be different from each other. Specifically, because the first to third core clusters 410_1 to 410_3 are designed differently, the optimal valid performance parameters for predicting the power consumption of the first to third core clusters 410_1 to 410_3 may be different. Accordingly, at least one of the first valid performance parameters may be different from any one of the second valid performance parameters and any one of the third valid performance parameters. However, this is only an embodiment, and is not limited thereto, and the second and third valid performance parameters of the second and third core clusters 410_2 and 410_3 may be selected with respect to the first core cluster 410_1, and accordingly, the first to third valid performance parameters may be the same.

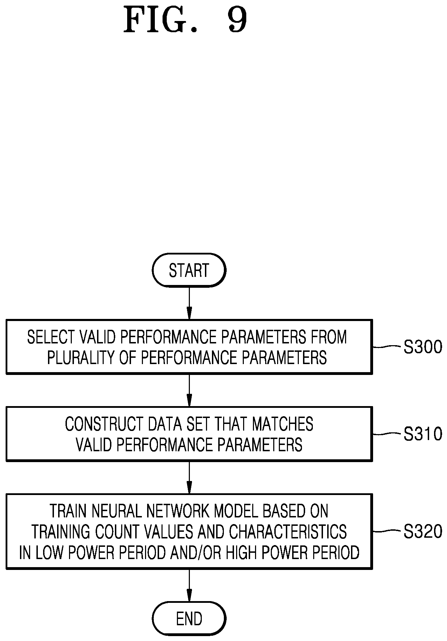

FIG. 9 is a flowchart illustrating a method of operating a device constructing a neural network model for predicting power consumption of a processor according to an embodiment.

Referring to FIG. 9, in operation S300, the device may select valid performance parameters from a plurality of performance parameters of a processor. For example, the device may construct a preliminary data set including an operating frequency, an operating voltage, a temperature, and the power consumption of the processor, and count values of the plurality of performance parameters, in a period where the processor performs a plurality of benchmark applications. The device may select the valid parameters having a low degree of cross-correlation and a high degree of correlation with power consumption based on the preliminary data set.

In operation S310, the device may construct a data set that matches the valid performance parameters selected in operation S300. For example, the device may construct the data set including training count values of the valid performance parameters in a period where the processor executes a plurality of user programs. In some embodiments, the data set also comprises power consumption values measured in the period where the processor executed the plurality of user programs. In some embodiments, the device may include measurement values of at least one of the operating frequency, the operating voltage, or the temperature of the processor in the data set, in the period where the processor executes the plurality of user programs.

In operation S320, the device may train the neural network model based on training count values and training power consumption values of the dataset constructed in operation S310 and the characteristics of the processor in a low power period and/or a high power period. In some embodiments, the device may further use measurement values of at least one of the operating frequency, the operating voltage, or the temperature of the processor to train the neural network model.

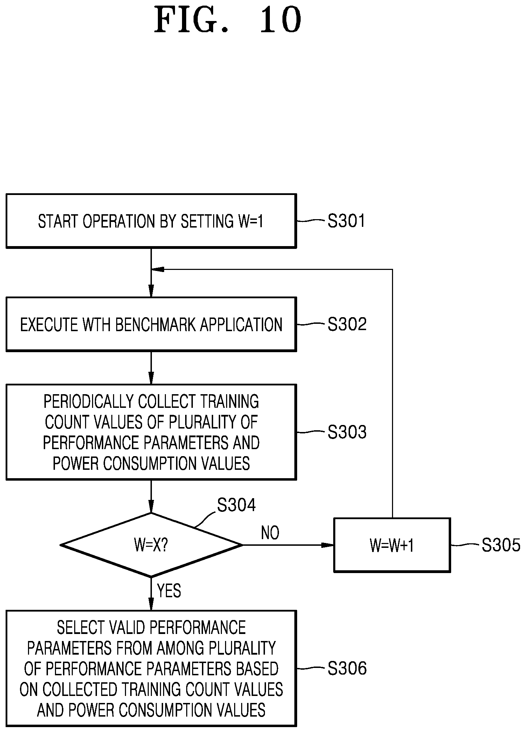

FIG. 10 is a flowchart for describing a specific embodiment of operation S300 of FIG. 9.

Referring to FIG. 10, in operation S301, a device may start an operation of selecting valid performance parameters by setting 'W' to 1. W may be a counter for counting the benchmark applications tested (e.g. the number of iterations of the method of FIG. 10).

In operation S302, the device may execute a Wth benchmark application through a processor.

In operation S303, the device may periodically collect training count values of a plurality of performance parameters by using a performance monitor of the processor and power consumption values of the processor by using a hardware logic, in a period where the Wth benchmark application is executed by the processor. As described above, the hardware logic is limitedly used in a mass production stage of a SoC for the selection of valid performance parameters and training of a neural network model, and may be removed from the processor in the future.

In operation S304, the device may determine whether 'W' reaches 'X' (where X is an integer greater than or equal to 1). 'X' may mean the total number of benchmark applications used to select valid performance parameters.

When operation S304 is 'NO', operation S305 is followed, and the device may count up 'W' (e.g. increase W by one) and repeat operations S302 to S304.

When operation S304 is 'YES', operation S306 is followed, and the device may select the valid performance parameters from among a plurality of performance parameters based on the collected training count values and power consumption values.

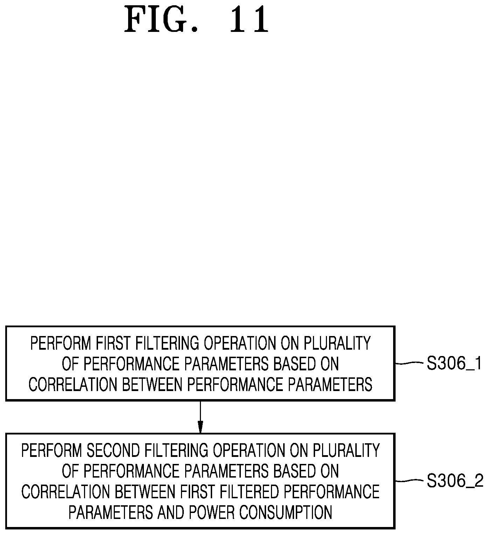

FIG. 11 is a flowchart for describing a specific embodiment of operation S306 of FIG. 10.

Referring to FIG. 11, in operation S306_1, a device may perform a first filtering operation on a plurality of performance parameters based on a correlation between a plurality of performance parameters. For example, the device may generate first information indicating degrees of correlation between the performance parameters by analyzing training count values of the plurality of performance parameters. The device may perform the first filtering operation so that only performance parameters having a degree of cross-correlation less than a first threshold remain among the plurality of performance parameters based on the generated first information.

In operation S306_2, the device may perform a second filtering operation on the plurality of performance parameters based on a correlation between the first filtered performance parameters and power consumption. For example, the device may generate second information indicating degrees of correlation between the first filtered performance parameters and the power consumption of the processor corresponding thereto. The device may perform the second filtering operation so that only performance parameters each having a degree of correlation with the power consumption greater than or equal to a second threshold remain among the first filtered performance parameters based on the generated second information. Thereafter, the device may select the second filtered performance parameters as valid performance parameters.

Whilst the method shows the first filtering operation (based on cross-correlation) being performed before the second filtering operation (based on correlation with power consumption), alternative embodiments may perform the second filtering operation before the first filtering operation.

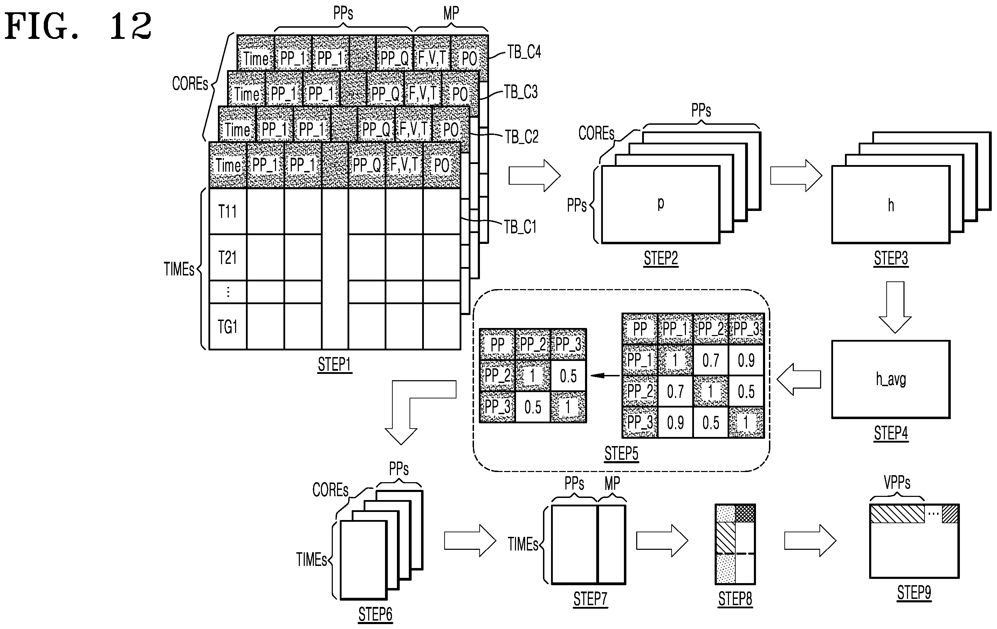

FIG. 12 is a diagram for describing a method of selecting valid performance parameters according to an embodiment. In FIG. 12, it is assumed that a processor includes a core cluster including first to fourth cores.

Referring to FIG. 12, as a first step STEP1, a device may periodically collect count values of a plurality of performance parameters PPs of the first to fourth cores from first to fourth performance monitoring circuits of the first to fourth cores during a 'T11' time to a 'TG1' time, periodically collect measurement values of a measurement parameters MP of the core cluster from a measurement circuit during the 'T11' time to the 'TG1' time, and generate first to fourth tables TB_C1 to TB_C4, in a period where a plurality of bench applications are executed by the processor. The first to fourth tables TB_C1 to TB_C4 may be the preliminary data set described above. For example, the plurality of performance parameters PPs may include first to Qth performance parameters PP_1 to PP_Q (where Q is an integer of 2 or more). In addition, for example, the measurement parameters MP may include first parameters F, V, and T related to an operating frequency, an operating voltage, and a temperature, and a second parameter PO related to a power consumption. In some embodiments, the first parameters F, V, and T may be omitted from the first to fourth tables TB_C1 to TB_C4. As described above, the plurality of bench applications may support an execution fixing function with respect to the first to fourth cores. For example, the benchmark application may be fixed to the first core and executed, and thus, execution of the benchmark application may be completed in the first core.

As an embodiment, as a second step STEP2, the device may use a 'Pearson' correlation coefficient method as a method of obtaining a degree of correlation (or a correlation value) to clearly identify degrees of correlation between the plurality of performance parameters PPs. The device may convert the first to fourth tables TB_C1 to TB_C4 into first data p indicating degrees of correlation between the plurality of performance parameters PPs for each core based on the 'Pearson' correlation coefficient method.

In an embodiment, as a third step STEP3, the device may convert the first data p into second data h based on a 'Fisher' conversion method. Specifically, because correlation coefficients of all core performance parameters need to be considered to select valid performance parameters, values of correlation coefficients listed in three dimensions may be converted into two dimensions through an arithmetic operation. In order to perform the arithmetic operation on the values of correlation coefficients, although the values need to follow a normal distribution, because the values of correlation coefficients do not follow the normal distribution, conversion to the second data h using the 'Fisher' conversion method may be necessary to perform an average operation on values of different correlation coefficients.

In an embodiment, as a fourth step STEP4, the device may convert the second data h into third data h_avg by performing an 'Element-wise' average operation. The device may convert the third data h_avg into fourth data based on a 'Reverse Fisher' conversion method. The fourth data may correspond to the first information for first filtering described above.

In an embodiment, as a fifth step STEP5, the device may remove a performance parameter having a degree of correlation greater than or equal to a first threshold. For example, when the first threshold is set to '0.8', the device may remove a first performance parameter PP_1 having a degree of correlation of '0.9' with each of second and third performance parameters PP_2 and PP_3. As such, only performance parameters having a degree of cross-correlation less than the first threshold may remain by repeating a removal operation. In this regard, the remaining performance parameters may be referred to as first filtered performance parameters PPs'.

In an embodiment, as a sixth step STEP6, the device may generate fifth data by extracting portions corresponding to the first filtered performance parameters PPs' from the first to fourth tables TB_C1 to TB_C4.

In an embodiment, as a seventh step STEP7, the device may generate sixth data by summing (or averaging) count values of each of cores COREs for each of times TIMEs and for each of the first filtered performance parameters PPs' based on the fifth data and merging a result of summing (or averaging) with measurement values of the measurement parameters MP of the first to fourth tables TB_C1 to TB_C4 for each of the times TIMEs.

In an embodiment, as an eighth operation STEP8, the device may generate seventh data in which degrees of correlation between the first filtered performance parameters PPs' and the power consumption of the processor are arranged in order of magnitude based on the sixth data. The device may retain only performance parameters each having the degree of correlation with the power consumption greater than or equal to a second threshold among the first filtered performance parameters PPs' based on the seventh data. The remaining performance parameters may be referred to as second filtered performance parameters or valid performance parameters VPPs. The seventh data may correspond to the information for second filtering described above.

In an embodiment, as a ninth step STEP9, the device may construct a data set for training a neural network model based on the valid performance parameters VPPs.

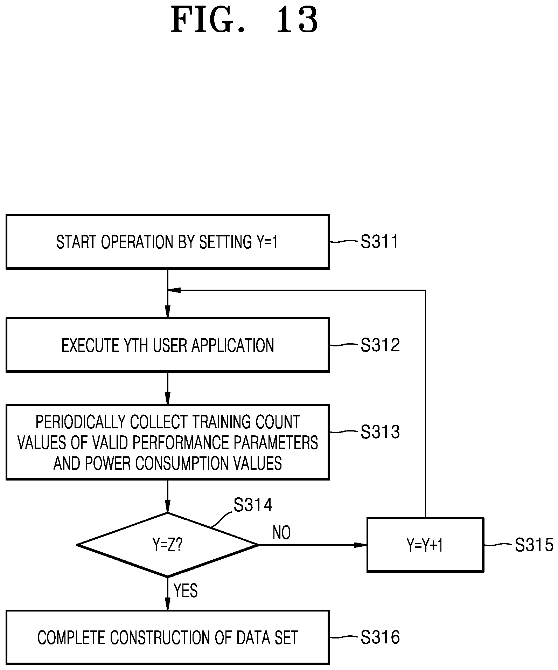

FIG. 13 is a flowchart for describing a specific embodiment of operation S310 of FIG. 9.

Referring to FIG. 13, in operation S311, a device may start an operation of constructing a data set by setting 'Y' to 1. Y may be a counter for counting the benchmark applications tested (e.g. the number of iterations of the method of FIG. 13).

In operation S312, the device may execute an Yth user application. In operation S313, the device may periodically collect training count values of valid performance parameters by using a performance monitor of a processor and power consumption values of the processor by using a hardware logic, in a period where the Yth user application is executed by the processor.

In operation S314, the device may determine whether 'Y' reaches 'Z' (where Z is an integer greater than or equal to 1). 'Z' may mean the total number of user applications used to construct a neural network model.

When operation S314 is 'NO', operation S315 is followed, and the device may count up 'Y' and repeat operations S312 to S314.

When operation S314 is 'YES', operation S316 is followed, and the device may complete the construction of the data set. The device may train the neural network model based on the training count values of the valid performance parameters and the power consumption values of the processor corresponding thereto included in the data set.

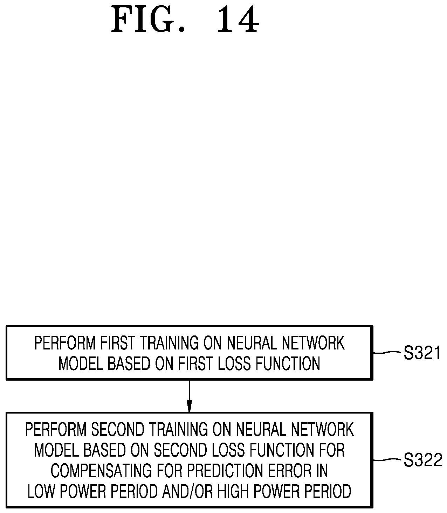

FIG. 14 is a flowchart for describing a specific embodiment of operation S320 of FIG. 9.

Referring to FIG. 14, in operation S321, the device may perform first training on a neural network model based on a first loss function. For example, the device may perform first training on the neural network model by using a data set constructed in FIG. 13 and the first loss function. As a result of performing first training, the neural network model may be preliminarily constructed.

In operation S322, the device may perform second training on the neural network model based on a second loss function for compensating for a prediction error of the preliminarily constructed neural network model in a low power period and/or a high power period. As a result of performing second training, the neural network model may be finally constructed.

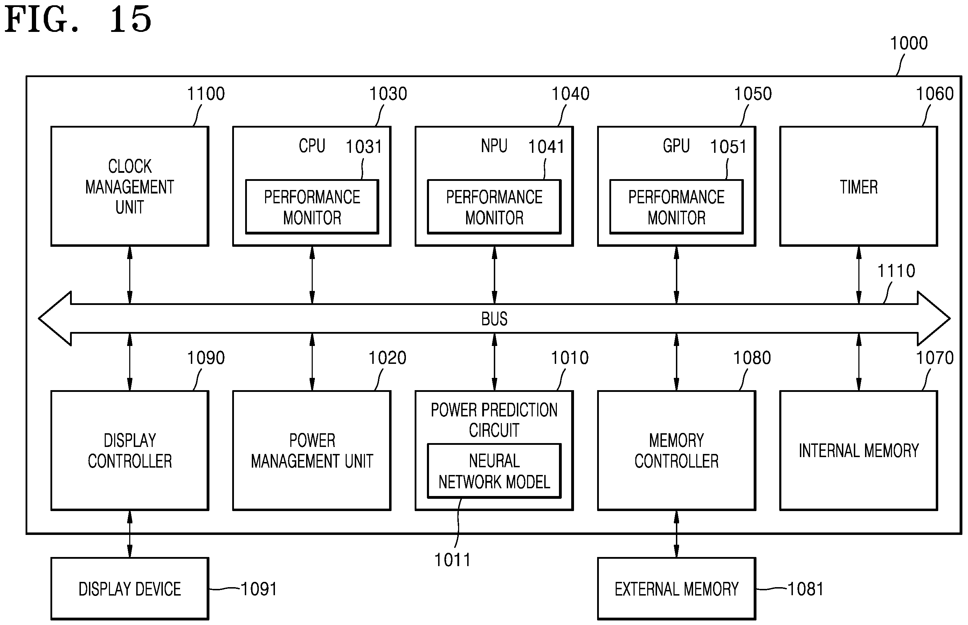

FIG. 15 is a block diagram illustrating a SoC 1000 according to an embodiment.

Referring to FIG. 15, the SoC 1000 may include a power prediction circuit 1010, a power management unit 1020, a CPU 1030, a NPU 1040, a GPU 1050, a timer 1060, an internal memory 1070, a memory controller 1080, a display controller 1090, a clock management unit 1100, and a bus 1110.

In an embodiment, the CPU 1030 may include a performance monitor 1031, and may process or execute programs and/or data stored in an external memory 1081 through the memory controller 1080.

As an embodiment, the NPU 1040 includes a performance monitor 1041, and may efficiently process a large-scale operation using a neural network. The NPU 1040 may perform deep learning by supporting simultaneous matrix operations.

In an embodiment, the GPU 1050 includes a performance monitor 1051, and may convert data read from the external memory 1081 through the memory controller 1080 into a signal suitable for a display device 1091. In some embodiments, the GPU 1050 may also support simultaneous matrix operations for deep learning.

In an embodiment, the power prediction circuit 1010 may predict the power consumption of the CPU 1030, the NPU 1040, and the GPU 1050. As a specific example, the power prediction circuit 1010 may receive count values of first valid performance parameters from the performance monitor 1031 of the CPU 1030, and predict the power consumption of the CPU 1030 based on the received count values and a neural network model 1011. The power prediction circuit 1010 may receive count values of second valid performance parameters from the performance monitor 1041 of the NPU 1040, and predict the power consumption of the NPU 1040 based on the received count values and the neural network model 1011. In addition, the power prediction circuit 1010 may receive count values of third valid performance parameters from the performance monitor 1051 of the GPU 1050, and may predict the power consumption of the GPU 1050 based on the received count values and the neural network model 1011.

In an embodiment, the CPU 1030, the NPU 1040, and the GPU 1050 may have different design methods and different supported performance parameters due to different purposes and operations. Accordingly, the first to third valid performance parameters may be different from each other. As a specific example, at least one of the first valid performance parameters of the CPU 1030 may be different from any one of the second valid performance parameters of the NPU 1040 and any one of the third valid performance parameters of the GPU 1050.

In addition, the neural network model 1011 may include first to third sub-neural network models trained and constructed for each of the CPU 1030, the NPU 1040, and the GPU 1050. As a specific example, the first sub-neural network model may be used to predict the power consumption of the CPU 1030, the second sub-neural network model may be used to predict the power consumption of the NPU 1040, and the third sub-neural network model may be used to predict the power consumption of the GPU 1050.

The timer 1060 may output a value indicating time based on an operating clock signal output from the clock management unit 1100.

The display device 1091 may display an image signal output from the display controller 1090. For example, the display device 1550 may be implemented as a liquid crystal display (LCD), a light emitting diode (LED) display, an organic LED (OLED) display, an active-matrix OLED (AMOLED) display, or a flexible display. The display controller 1090 may control the operation of the display device 1091.

The internal memory 1070 may include a random access memory (RAM) that temporarily stores programs (or applications), data, or instructions.

The memory controller 1080 may communicate with the external memory 1081 through an interface. The memory controller 1080 may control the overall operations of the external memory 1081, and control data exchange between any one of the CPU 1030, the NPU 1040, and the GPU 1050 and the external memory 1081.

The clock management unit 1100 may generate the operation clock signal and provide the operation clock signal to any one of the CPU 1030, the NPU 1040, and the GPU 1050. The clock management unit 1100 may include a clock signal generation device such as a phase locked loop, a delayed locked loop, or a crystal oscillator.

The power management unit 1020, the CPU 1030, the NPU 1040, the GPU 1050, the timer 1060, the internal memory 1070, the memory controller 1080, the display controller 1090, and the clock management unit 1100 may communicate with each other via the bus 1110.

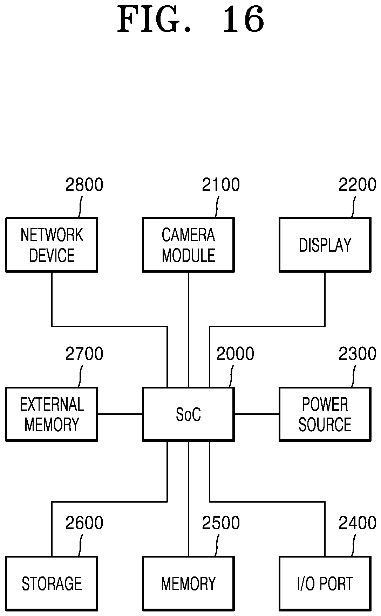

FIG. 16 is a block diagram illustrating an electronic device according to an embodiment.

Referring to FIG. 16, the electronic device may include a SoC 2000, a camera module 2100, a display 2200, a power source 2300, input/output (I/O) ports 2400, a memory 2500, a storage 2600, an external memory 2700, and a network device 2800.

As an embodiment, the SoC 2000 may predict the power consumption of a processor included in the SoC 2000 based on count values of valid performance parameters of the processor. In addition, the SoC 2000 may predict the power consumption of the processor by using a neural network model optimized for predicting the power consumption of the processor.

The camera module 2100 refers to a module capable of converting an optical image into an electrical image. Accordingly, the electrical image output from the camera module 2100 may be stored in the storage 2600, the memory 2500, or the external memory 2700. In addition, the electrical image output from the camera module 2100 may be displayed through the display 2200.

The display 2200 may display data output from the storage 2600, the memory 2500, the I/O ports 2400, the external memory 2700, or the network device 2800.

The power source 2300 may supply an operating voltage to at least one of the components. The power source 2300 may be controlled by the power management unit 110 shown in FIG. 1.

The I/O ports 2400 refer to ports capable of transmitting data to the electronic device or transmitting data output from the electronic device to an external device. For example, the I/O ports 2400 may be a port for connecting a pointing device such as a computer mouse, a port for connecting a printer, or a port for connecting a USB drive.

The memory 2500 may be implemented as a volatile memory or a nonvolatile memory. According to an embodiment, a memory controller capable of controlling a data access operation, for example, a read operation, a write operation (or a program operation), or an erase operation, on the memory 2500 may be integrated into or embedded in the SoC 2000. According to another embodiment, the memory controller may be implemented between the SoC 2000 and the memory 2500.

The storage 2600 may be implemented as a hard disk drive or a solid state drive (SSD).

The external memory 2700 may be implemented as a secure digital (SD) card or a multimedia card (MMC). According to an embodiment, the external memory 2700 may be a subscriber identity module (SIM) card or a universal subscriber identity module (USIM) card.

The network device 2800 refers to a device capable of connecting the electronic device to a wired network or a wireless network.

While embodiments have been particularly shown and described, it will be understood that various changes in form and details may be made to the embodiments without departing from the scope of the following claims.

**Claims**

1. A system-on-chip, SoC, comprising:

   a first processor comprising a first performance monitor configured to perform monitoring on a plurality of first performance parameters comprising first performance parameters;
   a power prediction circuit configured to predict a power consumption of the first processor based on first count values of the first performance parameters collected by the first performance monitor; and
   a power management circuit configured to manage power supplied to the first processor, based on a prediction result of the power prediction circuit.

2. The SoC of claim **1,** wherein a number of the first performance parameters is based on a number of registers supported by the first performance monitor.

3. The SoC of claim 1 or claim 2, wherein the first performance parameters have a degree of cross-correlation less than a first threshold, and have a degree of correlation with the power consumption of the first processor greater than or equal to a second threshold.

4. The SoC of any preceding claim, wherein the first performance parameters are selected from among the plurality of first performance parameters based on test count values of the plurality of first performance parameters generated by the first performance monitor by executing a plurality of benchmark applications by the first processor.

5. The SoC of claim 4, wherein the first performance parameters are selected by first filtering the plurality of first performance parameters based on first information indicating a first degree of correlation between the plurality of first performance parameters generated based on the test count values, and second filtering the plurality of first performance parameters based on second information indicating a second degree of correlation between the plurality of first performance parameters generated based on the test count values and the power consumption of the first processor.

6. The SoC of claim 5, wherein the first information is generated based on a Pearson correlation coefficient method and a Fisher conversion method.

7. The SoC of any preceding claim, wherein the first performance monitor is further configured to measure at least one of an operating frequency, an operating voltage, or a temperature of the first processor, and
   wherein the power prediction circuit is further configured to predict the power consumption of the first processor based on a measurement result of the first performance monitor.

8. The SoC of any preceding claim, wherein the power prediction circuit is further configured to predict the power consumption of the first processor based on a value output from a first neural network model by inputting the first count values of the first performance parameters to the first neural network model.

9. The SoC of claim 8, wherein the first neural network model is trained based on second count values of the first performance parameters, and the second count values are generated by the first performance monitor by executing a plurality of user applications by the first processor.

10. The SoC of claim 9, wherein the first neural network model is constructed by sequentially performing a first training operation based on a first loss function and a second training operation based on a second loss function based on characteristics of the first processor in a low power period or a high power period.

11. The SoC of claim 10, wherein the first loss function comprises a mean square error loss function, and wherein the second loss function comprises a systemic loss function.

12. The SoC of any preceding claim, wherein the power prediction circuit is further configured to predict next count values based on the first count values of the first performance parameters, and predict a next power consumption of the first processor based on the predicted next count values, and
wherein the power management circuit is further configured to plan power management regarding power to be supplied to the first processor, based on the prediction result of the power prediction circuit with respect to the next power consumption.

13. The SoC of claim 12, wherein the power prediction circuit is further configured to predict the next power consumption of the first processor based on a value output from a second neural network model by inputting the predicted next count values to the second neural network model.

14. The SoC of any preceding claim, wherein the first processor comprises a first core cluster including a plurality of first cores,

wherein the first performance monitor comprises a plurality of first performance monitoring counters configured to perform monitoring on the plurality of first performance parameters of the plurality of first cores, and wherein the first count values of the first performance parameters comprise count values of performance parameters corresponding to the plurality of first cores.

15. The SoC of claim 14, wherein the first processor further comprises a second core cluster including a plurality of second cores,

wherein the first performance monitor further comprises a plurality of second performance monitoring counters configured to perform monitoring on a second plurality of second performance parameters of the plurality of second cores, and wherein the first count values of the first performance parameters further comprise second count values of second performance parameters corresponding to the plurality of second cores.

# FIG. 1

10

PROCESSOR —120

PERFORMANCE
MONITOR —121

130

BUS

POWER
MANAGEMENT
UNIT —110

POWER PREDICTION
CIRCUIT —100

NEURAL
NETWORK MODEL —101

# FIG. 2A

START

PERFORM COUNTING OPERATION ON VALID
PERFORMANCE PARAMETERS AMONG PLURALITY
OF PERFORMANCE PARAMETERS OF PROCESSOR — S100A

INPUT COUNT VALUES OF VALID PERFORMANCE
PARAMETERS TO NEURAL NETWORK MODEL — S110A

CONTROL POWER SUPPLIED TO PROCESSOR,
BASED ON OUTPUT OF NEURAL NETWORK MODEL — S120A

END

# FIG. 2B

START

PERFORM COUNTING OPERATION ON VALID
PERFORMANCE PARAMETERS AMONG PLURALITY
OF PERFORMANCE PARAMETERS OF PROCESSOR
AND MEASURING OPERATION ON PROCESSOR — S100B

INPUT COUNT VALUES OF VALID
PERFORMANCE PARAMETERS AND MEASUREMENT
VALUES TO NEURAL NETWORK MODEL — S110B

CONTROL POWER SUPPLIED TO PROCESSOR,
BASED ON OUTPUT OF NEURAL NETWORK MODEL — S120B

END

# FIG. 3A

POWER PREDICTION CIRCUIT — 100

NEURAL NETWORK MODEL — 101

V_11 [VPP_1]
⋮
V_K1 [VPP_K]

IN

OUT

# FIG. 3B

100

POWER PREDICTION CIRCUIT

101

NEURAL NETWORK MODEL

V_11
[VPP_1]

⋮

V_K1
[VPP_K]

IN

V_12

⋮

V_N2

OUT

# FIG. 4

START

PERFORM COUNTING OPERATION ON VALID
PERFORMANCE PARAMETERS AMONG PLURALITY
OF PERFORMANCE PARAMETERS OF PROCESSOR ⎯ S200

INPUT COUNT VALUES OF VALID PERFORMANCE
PARAMETERS TO FIRST NEURAL NETWORK MODEL ⎯ S210

PREDICT NEXT COUNT VALUES BY INPUTTING
COUNT VALUES OF VALID PERFORMANCE
PARAMETERS TO SECOND NEURAL NETWORK MODEL ⎯ S230

CONTROL POWER SUPPLIED TO PROCESSOR, BASED
ON FIRST OUTPUT OF FIRST NEURAL NETWORK MODEL ⎯ S220

PREPARE FOR NEXT POWER CONTROL BY
INPUTTING PREDICTED COUNT VALUES
TO FIRST NEURAL NETWORK MODEL ⎯ S240

END

# FIG. 5

POWER PREDICTION CIRCUIT    200

IN1 {
V_11 [VPP_1]
⋮
V_K1 [VPP_K]
}

1ST NEURAL NETWORK MODEL    201

OUT1

OUT2

IN2 {

2ND NEURAL NETWORK MODEL    202

EV_11 [VPP_1]

EV_K1 [VPP_K]

EP 4 632 533 A1

# FIG. 6

EP 4 632 533 A1

| 1ST POWER CONTROL PERIOD | 2ND POWER CONTROL PERIOD | 3RD POWER CONTROL PERIOD |

T1            T2            T3

1ST COUNTING OPERATION      2ND COUNTING OPERATION      3RD COUNTING OPERATION

# FIG. 7A

300

310_1

**1ST CORE CLUSTER**

310_11                    310_1M

| 1ST CORE | ... | MTH CORE |

320

321_1                    321_M

321

| 1ST PERFORMANCE MONITORING COUNTER | ... | MTH PERFORMANCE MONITORING COUNTER |
| REG_11 | | REG_1M |
| REG_L1 | | REG_LM |

# FIG. 7B

# FIG. 8

400

410_1

1ST CORE CLUSTER

410_2

2ND CORE CLUSTER

420

1ST PERFORMANCE
MONITORING CIRCUIT

2ND PERFORMANCE
MONITORING CIRCUIT

421

3RD PERFORMANCE
MONITORING CIRCUIT

423

422

3RD CORE CLUSTER

410_3

# FIG. 9

START

SELECT VALID PERFORMANCE PARAMETERS FROM PLURALITY OF PERFORMANCE PARAMETERS — S300

CONSTRUCT DATA SET THAT MATCHES VALID PERFORMANCE PARAMETERS — S310

TRAIN NEURAL NETWORK MODEL BASED ON TRAINING COUNT VALUES AND CHARACTERISTICS IN LOW POWER PERIOD AND/OR HIGH POWER PERIOD — S320

END

# FIG. 10

START OPERATION BY SETTING W=1 —— S301

EXECUTE WTH BENCHMARK APPLICATION —— S302

PERIODICALLY COLLECT TRAINING COUNT VALUES OF PLURALITY OF PERFORMANCE PARAMETERS AND POWER CONSUMPTION VALUES —— S303

S304

W=X?

NO → W=W+1 —— S305

YES

SELECT VALID PERFORMANCE PARAMETERS FROM AMONG PLURALITY OF PERFORMANCE PARAMETERS BASED ON COLLECTED TRAINING COUNT VALUES AND POWER CONSUMPTION VALUES —— S306

# FIG. 11

PERFORM FIRST FILTERING OPERATION ON PLURALITY OF PERFORMANCE PARAMETERS BASED ON CORRELATION BETWEEN PERFORMANCE PARAMETERS —— S306_1

PERFORM SECOND FILTERING OPERATION ON PLURALITY OF PERFORMANCE PARAMETERS BASED ON CORRELATION BETWEEN FIRST FILTERED PERFORMANCE PARAMETERS AND POWER CONSUMPTION —— S306_2

# FIG. 12

EP 4 632 533 A1

# FIG. 13

START OPERATION BY SETTING Y=1 — S311

EXECUTE YTH USER APPLICATION — S312

PERIODICALLY COLLECT TRAINING COUNT VALUES OF VALID PERFORMANCE PARAMETERS AND POWER CONSUMPTION VALUES — S313

S314

Y=Z?  NO → Y=Y+1 — S315

YES

COMPLETE CONSTRUCTION OF DATA SET — S316

# FIG. 14

| PERFORM FIRST TRAINING ON NEURAL NETWORK MODEL BASED ON FIRST LOSS FUNCTION | S321 |

| PERFORM SECOND TRAINING ON NEURAL NETWORK MODEL BASED ON SECOND LOSS FUNCTION FOR COMPENSATING FOR PREDICTION ERROR IN LOW POWER PERIOD AND/OR HIGH POWER PERIOD | S322 |

# FIG. 15

# FIG. 16

2800

NETWORK DEVICE

2100

CAMERA MODULE

2200

DISPLAY

2700

EXTERNAL MEMORY

2000

SoC

2300

POWER SOURCE

2600

STORAGE

2500

MEMORY

2400

I/O PORT

Europäisches
Patentamt

European
Patent Office

Office européen
des brevets

## EUROPEAN SEARCH REPORT

**Application Number**

EP 25 16 9123

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/153188 A1 (ALIBABA GROUP HOLDING LTD [CN]) 15 August 2019 (2019-08-15) <br> * figures 1, 6, 7 * <br> * claims 33, 55 * <br> * paragraphs [0020], [0042], [0069] * <br> * paragraph [0051] - paragraph [0058] * <br> * paragraph [0093] - paragraph [0098] * <br> ----- | 1-15 | INV. <br> G06F1/32 <br> G06F1/00 <br> G06F1/3206 <br> G06F1/3234 <br> G06F11/30 <br> G06F11/34 |
| A | GILBERTO CONTRERAS ET AL: "Power prediction for intel XScale processors using performance monitoring unit events", LOW POWER ELECTRONICS AND DESIGN, 2005. ISLPED '05. PROCEEDINGS OF THE 2005 INTERNATIONAL SYMPOSIUM ON SAN DIEGO, CA, USA AUG. 8-10, 2005, PISCATAWAY, NJ, USA,IEEE, 2 PENN PLAZA, SUITE 701 NEW YORK NY 10121-0701 USA, <br> 8 August 2005 (2005-08-08), pages 221-226, XP058264089, <br> DOI: 10.1145/1077603.1077657 <br> ISBN: 978-1-59593-137-5 <br> * Section 3.1; <br> paragraph [0001] - paragraph [0003] * <br> ----- | 1-15 | ADD. <br> G06N3/08 |
| A | US 10 146 286 B2 (INTEL CORP [US]) 4 December 2018 (2018-12-04) <br> * column 21, line 15 - line 25 * <br> ----- | 1-15 | TECHNICAL FIELDS SEARCHED (IPC) <br><br> G06F <br> G06N |
| A | US 2021/096622 A1 (CHAOUAT LAURENT F [US] ET AL) 1 April 2021 (2021-04-01) <br> * figure 1 * <br> * paragraph [0004] * <br> * paragraph [0018] - paragraph [0025] * <br> * paragraph [0040] - paragraph [0042] * <br> ----- | 1-15 | |

The present search report has been drawn up for all claims

| Place of search | Date of completion of the search | Examiner |
|---|---|---|
| The Hague | 2 June 2025 | Khenak, Nawel |

EPO FORM 1503 03.82 (P04C01)

## ANNEX TO THE EUROPEAN SEARCH REPORT
## ON EUROPEAN PATENT APPLICATION NO.

EP 25 16 9123

This annex lists the patent family members relating to the patent documents cited in the above-mentioned European search report.
The members are as contained in the European Patent Office EDP file on
The European Patent Office is in no way liable for these particulars which are merely given for the purpose of information.

02-06-2025

| Patent document cited in search report | Publication date | Patent family member(s) | Publication date |
|---|---|---|---|
| WO 2019153188 A1 | 15-08-2019 | NONE | |
| US 10146286 B2 | 04-12-2018 | TW 201800898 A | 01-01-2018 |
| | | US 2017205863 A1 | 20-07-2017 |
| | | WO 2017123334 A1 | 20-07-2017 |
| US 2021096622 A1 | 01-04-2021 | CN 114424144 A | 29-04-2022 |
| | | DE 112020004583 T5 | 02-06-2022 |
| | | TW 202113604 A | 01-04-2021 |
| | | US 10948957 B1 | 16-03-2021 |
| | | US 2021200286 A1 | 01-07-2021 |
| | | US 2022413576 A1 | 29-12-2022 |
| | | US 2025093926 A1 | 20-03-2025 |
| | | WO 2021061364 A1 | 01-04-2021 |

EPO FORM P0459

For more details about this annex : see Official Journal of the European Patent Office, No. 12/82